# EUROPEAN PATENT APPLICATION

(11) **EP 4 697 813 A1**
(43) Date of publication of application: **18.02.2026**
(21) Application number: 24795599.0
(22) Date of filing: 05.03.2024
(51) Int. Cl.: H04W 52/02

(54) **ENERGY-SAVING METHOD AND APPARATUS, AND COMPUTER-READABLE STORAGE MEDIUM**

(30) Priority: 26.04.2023 CN 202310478496
(71) Applicant: ZTE Corporation, Shenzhen, Guangdong 518057 (CN)
(72) Inventor: ZHOU, Junchao, Shenzhen, Guangdong 518057 (CN); LIU, Xiliang, Shenzhen, Guangdong 518057 (CN); ZHANG, Dawei, Shenzhen, Guangdong 518057 (CN); ZHAN, Yajun, Shenzhen, Guangdong 518057 (CN); FANG, Yanwei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/080137
(87) International publication number: WO 2024/222212

(57) **Abstract**

Disclosed are an energy-saving method, a communication apparatus and a computer-readable storage medium. The energy-saving method comprises: acquiring service data of a network device within a first historical time period; according to the service data, predicting operation resources of the network device within a future time period; and performing an energy-saving operation on surplus resources in the network device within the future time period, wherein the surplus resources are resources in resources of the network device other than the operation resources.

## Description

The present disclosure claims a priority to Chinese patent application No. 202310478496.2, filed on April 26, 2023, the entire content of which is incorporated into the present disclosure by reference.

### TECHNICAL FIELD

The present disclosure relates to the field of communication technologies, and in particular, to an energy-saving method, an apparatus, and a computer-readable storage medium.

### BACKGROUND

In order to ensure the sustainable development of mobile communication networks, relevant departments have pointed out that energy saving for network devices can effectively reduce greenhouse gas emissions, meet the basic requirements of green, low-carbon, and energy saving and emission reduction, thereby ensuring the sustainable development of mobile communication networks.

### SUMMARY

In an aspect, there is provided an energy-saving method. The energy-saving method includes: acquiring service data of a network device within a first historical time period; predicting, according to the service data, an operating resource of the network device within a future time period; and performing an energy-saving operation on a remaining resource in the network device within the future time period; the remaining resource is a resource in the resources of the network device other than the operating resource.

In another aspect, there is provided an energy-saving apparatus. The energy-saving apparatus includes: a communication unit and a processing unit; the communication unit is configured to acquire service data of the network device within a first historical time period; the processing unit is configured to, predict, according to the service data, an operating resource of the network device within a future time period; the processing unit is further configured to perform an energy-saving operation on remaining resource in the network device within the future time period; the remaining resource is a resource of in the resources of the network device other than the operating resource.

In yet another aspect, there is provided a communication node, including: a memory and a processor; the memory and the processor are coupled; the memory is configured to store computer programs, upon being executed by the processor, implement the energy-saving method described in the above any aspect.

In yet another aspect, there is provided a communication apparatus. The communication apparatus includes a processor and a memory for storing instructions executable by the processor; the processor is configured to execute the instructions to enable the communication apparatus to perform the energy-saving method described in the above any aspect.

In yet another aspect, there is provided a computer readable storage medium. The computer readable storage medium stores computer program instructions that, upon being executed by a processor, implement the energy-saving method described in the above any aspect.

In yet another aspect, there is provided a computer program product. The computer program product includes computer program instructions that, upon being executed by a processor, implement the energy-saving method described in the above any aspect.

### BRIEF DESCRIPTION OF THE DRAWINGS

In order to describe the technical solutions in the present disclosure more clearly, the drawings to be used in some embodiments of the present disclosure will be introduced briefly below. Obviously, the drawings described below are merely drawings of some embodiments of the present disclosure, and for those of ordinary skill in the art, other drawings can be obtained according to these drawings.
FIG. 1 is a structural schematic diagram of a communication system in accordance with some embodiments.
FIG. 2 is a flowchart of an energy-saving method in accordance with some embodiments.
FIG. 3 is a flowchart of another energy-saving method in accordance with some embodiments.
FIG. 4 is a schematic structural diagram of a network device in accordance with some embodiments.
FIG. 5 is a flowchart of yet another energy-saving method in accordance with some embodiments.
FIG. 6 is a structural schematic diagram of a communication apparatus in accordance with some embodiments.
FIG. 7 is a structural schematic diagram of another communication apparatus in accordance with some embodiments.

### DETAILED DESCRIPTION

In order to make those skilled in the art to better understand the technical solutions of the embodiments of the present disclosure, the technical solutions in the present disclosure will be described clearly and completely below in conjunction with the drawings in the present disclosure. Obviously, the described embodiments are merely some but not all of embodiments of the present disclosure. All other embodiments obtained based on the embodiments of the present disclosure by those of ordinary skill in the art without paying any creative effort shall be included in the protection scope of the present disclosure.

In should be noted that in the present disclosure, a term such as "exemplary" or "for example" is used to present an example, an illustration, or an explanation. Any embodiment or design solution described herein with "exemplary" or "for example" in the present disclosure is not necessarily to be construed as preferred or advantageous over other embodiments or design solutions. Rather, the usage of the term such as "exemplary" or "for example" is intended to present relevant concepts in a specific manner.

Hereinafter, the terms, "first", "second", etc., are used for descriptive purposes only and are not to be construed as indicating or implying relative importance or implicitly indicating a number of indicated technical features. Thus, a feature defined with "first" or "second", etc., may explicitly or implicitly include one or more of the features.

In the description of the present disclosure, unless otherwise specified, the symbol "/" means "or", for example, "A/B" may mean A or B. "And/or" describes an association relationship between associated objects, which represents that there may be three kinds of relationships. For example, A and/or B may represent three cases: only A, both A and B, or only B. In addition, "at least one" means one or more, and "a/the of plurality" means two or more.

In order to ensure the sustainable development of mobile communication networks, relevant departments have pointed out that green and low-carbon will be the basic requirements of mobile communication networks. With the vigorous development of technologies such as digital-intelligence integration, air-space-ground integration, and virtual reality, mobile communication networks have also put forward higher requirements for green and low-carbon developments. Since energy-saving for the network device can effectively reduce greenhouse gas emissions, meet the basic requirements of green and low-carbon development, and energy conservation and emission reduction, thereby ensuring the sustainable development of mobile communication networks, how to save energy and reduce consumption for the network device has become an urgent problem to be solved by those skilled in the art.

Currently, energy-saving is mainly achieved through interactions between a network device and other energy-saving devices. Specifically, the network device may send the operating data of the network device to an energy-saving device. The energy-saving device configure an energy-saving instruction for the network devices based on the operating data of the network devices, and send the energy-saving instruction to the network device. The network device perform an energy-saving operation based on the energy-saving instruction to achieve the energy-saving effect. As can be seen based on the above, the current process of energy-saving for the network device is relatively cumbersome, and multi-hop forwarding is required between the network device and other energy-saving devices in order to achieve the energy-saving effect, which results in low energy-saving efficiency of the network device.

In the embodiments of the present disclosure, a network device performs an energy-saving operation on its own resource based on historical service data of the network device, without acquiring service data from an external device and providing energy-saving operation instructions to the network device by the external device. Thereby, the communication overhead with the external device can be saved during the energy-saving process of the network device. Moreover, compared with communicating with the external device, internal communication takes less time, thus saving the time of energy-saving operations and thereby improving the energy-saving efficiency of the network device.

The technical solutions provided by the embodiments of the present disclosure can be applied to various communication systems, such as, a New Radio (NR) communication system using the fifth generation mobile communication technology (5G), a future evolution system, or a multi-communication convergence system.

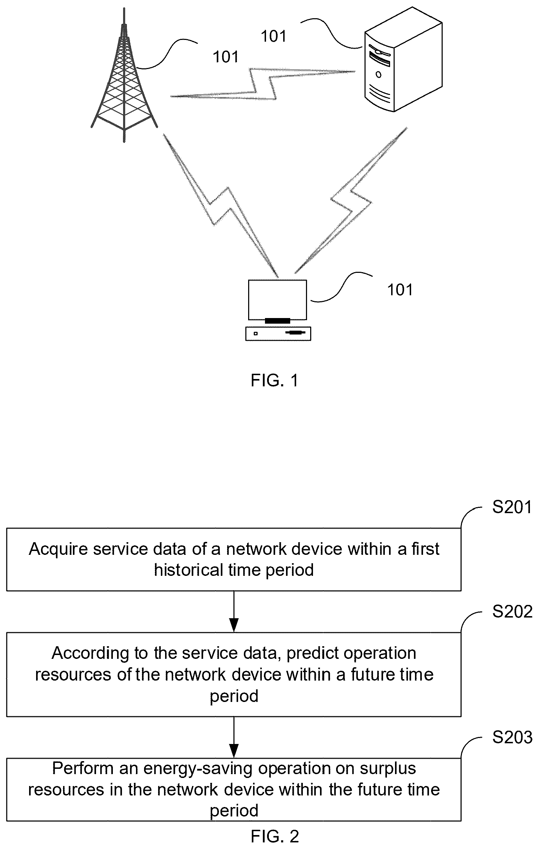

Exemplarily, FIG. 1 shows a structural schematic diagram of a communication system provided by the embodiments of the present disclosure. The communication system may include at least one network device 101. Only three network devices 101 are shown in FIG. 1.

The network device 101 is configured to predict, according to the service data, the operating resource of the network device within a future time period based on the service data of the network device within a first historical time period, and perform an energy-saving operation on a remaining resource in the network device within the future time period.

The remaining resource is a resource in the resources of the network device other than the operating resource.

In an example, the network device 101 may be a terminal device with an wireless communication function, which may be deployed on land, including indoors or outdoors, handheld or vehicle-mounted; may also be deployed on the water (e.g., a ship, etc.); may also be deployed in the air (e.g., an airplane, a balloon, and a satellite, etc.).

In another example, the network device 101 may also be a device with wireless transceiving functions or a chip or chip system that may be provided in the device. The network device 101 includes, but is not limited to, any node in a small base station, a wireless access point, a transmission receive point (TRP), a transmission point (TP), a macro base station, a relay base station, and some other access nodes.

In another example, the network device 101 may also be a core network device, where the core network device includes at least one of: a policy and charging enforcement function (PCEF), a policy and charging rules function (PCRF), a user plane function (UPF), or a session management function (SMF).

It should be noted that FIG. 1 is only an exemplary framework diagram. The number of nodes and the names of the various devices included in FIG. 1 are not limited. In addition to the functional nodes shown in FIG. 1, the communication system may further include other nodes, which is not limited in the present disclosure.

The embodiments of the present disclosure do not limit the application scenarios. The system architecture and application scenarios described in the embodiments of the present disclosure are for the purpose of explaining the technical solutions of the embodiments of present disclosure more clearly, and do not constitute a limitation on the technical solutions provided by the embodiments of present disclosure. Those of ordinary skill in the art should know that, with the evolution of the network architecture and the emergence of new business scenarios, the technical solutions provided in the embodiments of the present disclosure are also applicable to similar technical problems.

FIG. 2 is a flowchart of an energy-saving method provided by embodiments of the present disclosure. As is shown in FIG. 2, the method may include: S201-S203.

In S201, the network device acquires service data of the network device within a first historical time period.

As an example, the first historical time period described above may be the latest five hours before the current moment. The above is only an exemplary description of the first historical time period. The above first historical time period may also be other time periods (e.g., the last 7 hours before the current moment), which is not limited in the present disclosure.

In some embodiments, the service data includes at least one of: throughput, network device load, number of service request(s), or service duration. The above is only an exemplary description of service data, the above service data may also include other data (e.g., traffic), which is not limited in the present disclosure.

In S202, the network device predicts, according to the service data, the operating resource of the network device within a future time period.

In an implementation, the implementation process of the above S202 may be that: the network device may input the above service data into a computing power demand prediction model obtained from pre-training, to obtain the computing power demand required by the network device within the future time period, and determine the operating resource required by the network device within the future time period based on the above computing power demand.

As an example, the computing power demand may be used to characterize the network processing capabilities required by the network device within the future time period. The unit of the above computing power demand can be hash/s.

In combination with the above examples, the implementation process where the network device determines the operating resource required by the network device within the future time period based on the computing power demand may be that: the network device may determine computing power corresponding to each resource, and based on the above computing power demand and the computing power corresponding to each resource, determine the number of resources required by the network device within the future time period; the network device determines, based on the amount of resources required by the network device within the future time period, the operating resource required by the network device within the future time period from all resources of the network device.

In some examples, the duration corresponding to the above future time period may be equal to the duration corresponding to the first historical time period. For example, the above future time period is the last 5 hours after the current moment, and the first historical time period is the last 5 hours before the current moment.

The duration corresponding to the above future time period may not be equal to the duration corresponding to the first historical time period. For example, the above future time period is 7 hours after the current moment, and the first historical time period is 3 hours before the current moment.

In some embodiments, a resource includes at least one of: a central processing unit (CPU), a graphics processing unit (GPU), a network processing unit (NPU), or a data processing unit (DPU).

It should be noted that the above is only an exemplary description of the resource, and the above resource may further include other resources, which is not limited in the present disclosure.

In S203, the network device performs an energy-saving operation on a remaining resource in the network device within the future time period.

The remaining resource is a resource in the resources of the network device other than the operating resource.

In some embodiments, the implementation process of the above S203 may be that: the network device performs hibernation processing on the remaining resource within the future time period.

In some other embodiments, the implementation process of the above S203 may be that: the network device adjusts a current operating frequency of the remaining resource to a preset operating frequency within the future time period. The preset operating frequency is lower than the current operating frequency.

In combination with the above embodiments, the network device may preferentially adjust the operating frequency of the remaining resource. After the network device has adjusted the operating frequency of the remaining resource, if there are still idle resources in the current operating resource of the network device, the network device may perform hibernation processing on the remaining resource to avoid the problem of resource waste and improve resource utilization.

It is understandable that by performing the energy-saving operation on the remaining resource in the network device within the future time period, a large amount of electricity costs may be saved, thereby helping to reduce the construction cost of the network device and increase the investment value of the network device.

As an implementation, the network device sets a preset operating frequency based on historical experience. For example, the network device may set a preset operating frequency to 10 Hertz (Hz). The above is only an exemplary description of the preset operating frequency. The network device may also set the preset operating frequency to 8 Hz, which is not limited in the present disclosure.

As another implementation, the network device determines the preset operating frequency based on the above computing power demand and the total number of resources of the network device. For example, taking the computing power demand of 400,000 hash/s and the total number of resources as 64 as an example: the network device may set the preset operating frequency to 2 GHz.

In some embodiments, the network device may operate based on the operating resource within the future time period. It is understandable that after the network device has determined the operating resource of the network device within the future time period, the network device may operate based on the operating resource within the future time period, thereby avoiding the problem of resource waste caused by occupying more redundant resources.

In the embodiments of the present disclosure, the network device determines the operating resource of the network device within the future time period based on its own historical service data, and performs an energy-saving operation on the remaining resource other than the operating resource within the future time period. In view of this, it can be seen that the network device of the embodiments of the present disclosure performs an energy-saving operation on its own resources based on internal data, without acquiring service data from the side of the external device and providing energy-saving operation instructions to the network device by the external device, thereby the communication overhead with the external device can be saved during the energy-saving process of the network device. Moreover, compared with communicating with the external device, internal communication takes less time, thus saving the time of energy-saving operations and thereby improving the energy-saving efficiency of the network device.

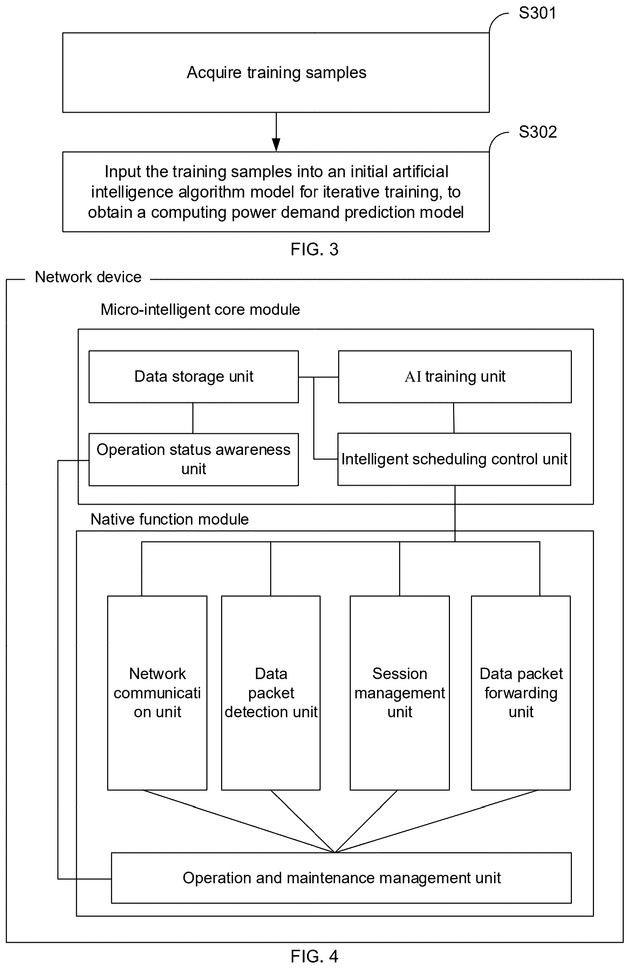

In some embodiments, as shown in FIG. 3, the computing power demand prediction model in the embodiments of the present disclosure is obtained through the following training of S301-S302.

In S301, the network device acquires training samples.

The training samples include multiple samples with labels. The samples include service data of the network device within a second historical time period. Labels of the samples include the computing power demand of the network device within a third historical time period after the second historical time period.

In some implementation, the implementation process of the above S301 may be that: the network device acquires the service data of the network device within multiple second historical time periods and the computing power demand of the network device within multiple third historical time periods. A second historical time period corresponds to a third historical time period. The network device verifies the consistency and integrity of the service data within the above multiple second historical time periods and the computing power demand within the multiple third historical time periods, and standardizes and normalizes the service data and computing power demand obtained after the verification. The network device combines the service data of the network device within the multiple second historical time period and the computing power demand of the network device within the third historical time period obtained after processing, to determine multiple samples with labels.

It is understandable that the network device determines the above multiple samples with labels based on the service data of the network device within the above multiple second historical time periods and the computing power demand of the network device within multiple third historical time periods obtained after verification and processing, thereby be capable of ensuring that the above multiple samples with labels meet the requirements of the initial artificial intelligence algorithm model for input data (such as, data requirement, format requirement, etc.), thereby avoiding the problem of model training anomalies due to input data not meeting the requirement.

In S302, the network device inputs the training samples into the initial artificial intelligence algorithm model for iterative training, to obtain the computing power demand prediction model.

In some implementations, the implementation process of the above S302 may be that: the network device inputs the training samples into the initial artificial intelligence algorithm model, to obtain the prediction result corresponding to the above training samples, and compares the prediction result corresponding to the above training samples with the sample label in the training samples to obtain the accuracy of the initial artificial intelligence algorithm model. In a case where the accuracy of the above initial artificial intelligence algorithm model does not reach the preset accuracy rate, the network device adjusts parameters of the initial artificial intelligence algorithm model and re-tests the initial artificial intelligence algorithm model obtained after the adjustment of the parameters until the accuracy of the initial artificial intelligence algorithm model reaches the preset accuracy rate. The network device may determine the initial artificial intelligence algorithm model at the last iteration as the computing power demand prediction model.

In some examples, the artificial intelligence algorithm model described above may include at least one of: a long short-term memory (LSTM) network model, an ant colony algorithm model, or a neural network model.

In the embodiments of the present disclosure, the network device acquires multiple samples with labels and trains the initial artificial intelligence algorithm model based on the multiple samples with labels to obtain the computing power demand prediction model. The network device inputs the service data of the first historical time period into the above computing power demand prediction model to obtain the computing power demand of the network device within the future time period, and determines the operating resource of the network device within the future time period based on the computing power demand of the network device within the future time period. Since the computing power demand prediction model is obtained based on iterative training of the initial artificial intelligence algorithm model, the above computing power demand prediction model has high accuracy, thereby ensuring the accuracy of the operating resource predicted by the computing power demand prediction model obtained after training.

In some embodiments, taking the network device 101 as UPF as an example, FIG. 4 shows a schematic structural diagram of a network device provided by embodiments of the present disclosure. The network device man include the following two modules: a micro-intelligent core module and a native function module.

The micro-intelligent core module may include: an operation status awareness unit, a data storage unit, an artificial intelligence (Al) training unit, and an intelligent scheduling control unit. The operation status awareness unit is configured to collect service data of the above network device.

The operation status awareness unit is mainly configured to collect service data of the network device in real time and send the above service data to the data storage unit.

The data storage unit is mainly configured to process the service data from the operation status awareness unit (e.g., consistency and integrity verification processing, standardization processing, normalization processing, etc.), so that the service data obtained after processing can meet the preset requirements (e.g., data content, data format, etc.) of the initial artificial intelligence algorithm model in the Al training unit for input data. The data storage unit is further configured to maintain the local database of the data storage unit, specifically, the data storage unit stores the service data within a time period close to the current moment in the above local database, continuously updates the service data in the above local database, and clears the previously stored service data (e.g., service data that is not within the time period close to the current moment).

The Al training unit is mainly configured to acquire historical service data from the data storage unit, and train the initial artificial intelligence algorithm model based on the above historical service data until the accuracy of the initial artificial intelligence algorithm model after training reaches the preset requirements, to obtain the computing power demand prediction model. The Al training unit is further configured to send the above computing power demand prediction model to the intelligent scheduling control unit.

In some implementations, the above Al training unit may be only configured to perform training operations on the computing power demand prediction model, and not to perform training operations on other models, which may avoid other training operations from preempting resources for training operations on the computing power demand prediction model, thereby ensuring the energy-saving efficiency of the network device.

The intelligent scheduling control unit is mainly configured to input the historical service data obtained from the side of the data storage unit into the computing power demand prediction model obtained from the side of the Al training unit, to obtain the computing power demand of the network device within the future time period, and determine the operating resource of the network device within the future time period based on the above computing power demand. The intelligent scheduling control unit is further configured to generate an energy-saving instruction based on the above operating resource, and send the above energy-saving instruction to the native function module, and is further configured to send a resource allocation instruction to the native function module.

In some examples, the energy-saving instruction described above may include a hibernation instruction and a frequency reduction instruction. The hibernation instruction is configured to indicate the native function module to perform a hibernation processing on the remaining resource (i.e., a resource in all the resources of the network device other than the operating resource) within a future time period. The frequency reduction instruction is configured to indicate the native function module to adjust the current operating frequency of the remaining resource (i.e., a resource in all resources of the network device other than the operating resource) to the preset operating frequency within a future time period.

In some embodiments, the intelligent scheduling control unit described above may be only configured to determine an energy-saving instruction and a resource allocation instruction on the native function model, and not to determine instructions on other modules and/or other devices, which can avoid the operation of determining other instructions from preempting the resource of the operation of determining the energy-saving instruction and resource allocation instruction of the native function model, thereby ensuring the energy-saving efficiency of the network device.

As an example, the resource allocation instruction is configured to indicate the native function module to operate based on the operating resource within the future time period.

The native function module may include: a network communication unit, a data packet detection unit, a session management unit, a data packet forwarding unit, and an operation and maintenance management unit.

The network communication unit is mainly configured to control communication between the network device and external devices, as well as communication between various modules in the network device.

The data packet detection unit is mainly configured to detect information such as the type of the data packet.

The session management unit is mainly configured to manage sessions of various devices (e.g., protocol data unit (PDU) sessions).

The data packet forwarding unit is mainly configured to determine a forwarding strategy corresponding to each data.

The operation and maintenance management unit is mainly configured to communicate with the micro-intelligent core module and further configured to manage basic functions (e.g., manage fault management, configuration management, accounting management, performance management, and security management (FCAPS)).

The functions of respective units in the native function model may be understood by referring to the description in the general technologies, which is not repeated and limited in the present disclosure.

It should be noted that the above micro-intelligent core module may be deployed as a whole in a container or a virtual machine, or deployed separately as an independent process. The various units of the above micro-intelligent core module may be deployed separately in isolation, so that a failure in any unit will not affect the normal operation of other units; the various units may also be deployed in combination, so that the above units may be freely combined with each other.

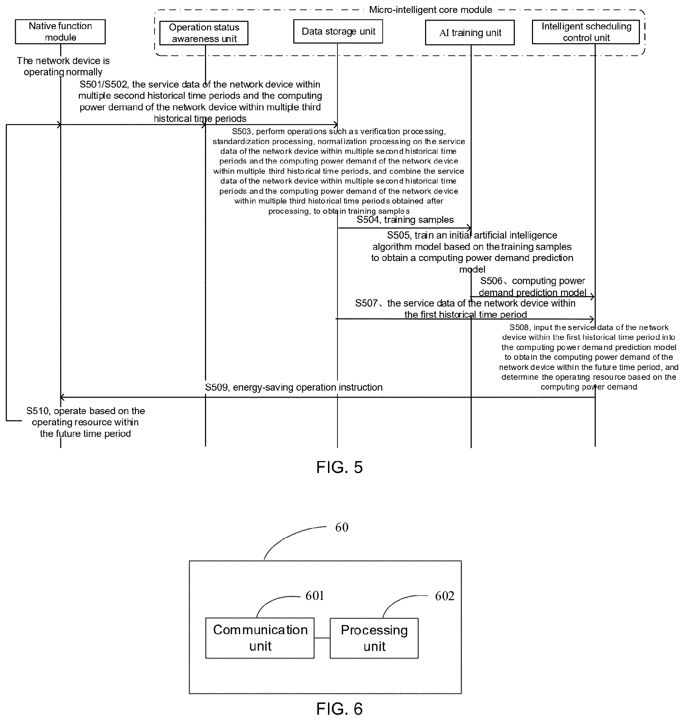

In conjunction with FIG. 4, as shown in FIG. 5, the embodiments of the present provide an energy-saving method, where the method includes the following S501 to S510.

In S501, the native function module (e.g., the operation and maintenance management unit) sends the service data of the network device within multiple second historical time periods and the computing power demand of the network device within multiple third historical time periods to the operation status awareness unit.

A second historical time period corresponds to a third historical time period.

It should be noted that the energy-saving method provided in the embodiments of the present disclosure is applied in a case where the network device is operating normally.

In some implementations, the operation status awareness unit and the native function module may communicate through the following three interfaces: an energy-saving interface, a management interface, and a service interface. The energy-saving interface is a custom interface and may be only used to transmit service data of the network device within the first historical time period. The management interface may be used to transmit service data of the network device within the first historical time period, as well as management messages supporting protocols such as simple network management protocol (SNMP), file transfer protocol (FTP), and secure file transfer protocol (SFTP). The service interface may be used to transmit service data of the network device within the first historical time period, as well as service message.

It should be noted that since the energy-saving interface may be only used to transmit historical service data, while the management interface and the service interface may be used to not only transmit historical service data but also transmit other data, the energy-saving interface transmits historical service data faster than the management interface and the service interface.

It is understandable that the above operation status awareness unit is located inside the network device and may acquire historical service data based on the internal interface of the network device (e.g., the energy-saving interface, the management interface, and the service interface). In this way, there is no need to perform multiple data forwarding and/or routing configurations with external devices to obtain historical service data, thereby avoiding interactions with external devices.

In S502, the operation status awareness unit sends the service data of the network devices within multiple second historical time periods and the computing power demand of the network device within multiple third historical time periods to the data storage unit.

In S503, the data storage unit performs verification processing, standardization processing, normalization processing on the service data of the network device within multiple second historical time periods and the computing power demand of the network device within multiple third historical time periods, and combines the service data of the network devices within multiple second historical time periods and the computing power demand of the network devices within multiple third historical time periods obtained after processing, to obtain training samples (i.e., multiple samples with labels).

In S504, the data storage unit sends the above training samples to the Al training unit.

In S505, the Al training unit iteratively trains the initial artificial intelligence algorithm model based on the above training samples, to obtain a computing power demand prediction model.

In S506, the Al training unit sends the above computing power demand prediction model to the intelligent scheduling unit.

In S507, the data storage unit sends the service data of the network device within the first historical time period to the intelligent scheduling unit.

In some implementations, the above data storage unit may periodically obtain short-term service data of the network device from the native function module (e.g., an operation and maintenance management unit) in UPF, store short-term service data in the current period, and clears short-term service data within historical periods.

In S508, the intelligent scheduling unit inputs the service data of the network device within the first historical time period into the computing power demand prediction model, to obtain the computing power demand of the network device within the future time period, and determines the operating resource based on the computing power demand.

In S509, the intelligent scheduling unit sends an energy-saving operation instruction to the native function module. Herein, the energy-saving operation instruction is used to indicate the native function module to perform an energy-saving operation on the remaining resource in the network device within the future time period.

In S510, the native function module operates based on the operating resource within the future time period.

It is understandable that the above micro-intelligent core module may dedicated to the energy-saving function of the network device and is not configured for the implementation of other functions, thereby resulting in the relatively low resource overhead deployed within the micro-intelligent core module and high deployment flexibility. The micro-intelligent core module may dynamically determine the operating resource of the network device in real time, so that the real-time performance of the micro-intelligent core module is better.

It can be understood that, to achieve the above-mentioned functions, the energy-saving apparatus includes corresponding hardware structures and/or software modules for performing respective functions. Those skilled in the art should easily realize that, in combination with the exemplary algorithm steps described in the embodiments of the present disclosure, the present disclosure may be implemented in the form of hardware or a combination of hardware and computer software. Whether a certain function is performed by the hardware or the computer software driving hardware depends on the specific application and design constraints of the technical solutions. Professional technicians may use different methods to implement the described functions for each specific application, but such implementation should not be considered beyond the scope of the present disclosure.

In the embodiments of the present disclosure, the communication apparatus may be divided into function modules according to the foregoing method embodiments. For example, each functional module may be divided corresponding to each function, or two or more functions may be integrated into one functional module. The above integrated module may be implemented in the form of hardware, or may be implemented in the form of software. It should be noted that the division of the modules in embodiments of the present disclosure is schematic, which is only a logical functional division, and there may be other divisions in actual implementations. The following description uses an example of dividing each function module corresponding to each function.

In a case of dividing each functional module corresponding to each function, FIG. 6 shows another structural schematic diagram of a communication apparatus 60, where the communication apparatus 60 may be used to execute the energy-saving methods shown in FIG. 2 to FIG. 3 and FIG. 5. The communication apparatus 60 shown in FIG. 6 includes: a communication unit 601 and a processing unit 602.

The communication unit 601 is configured to acquire service data of the network device within a first historical time period.

The processing unit 602 is configured to predict, according to the service data, an operating resource of the network device within a future time period.

The processing unit 602 is further configured to perform an energy-saving operation on a remaining resource in the network device within the future time period; where the remaining resource is a resource in resources of the network device other than the operating resource.

In some embodiments, the service data includes at least one of: throughput, network device load, number of service request(s), or service duration.

In some embodiments, the processing unit 602 is further configured to perform hibernation processing on the remaining resource within the future time period.

In some embodiments, the processing unit 602 is further configured to adjust a current operating frequency of the remaining resource to a preset operating frequency within the future time period; the preset operating frequency is lower than the current operating frequency.

In some embodiments, the processing unit 602 is further configured to input the service data into a computing power demand prediction model to obtain computing power demand of the network device within the future time period; the processing unit 602 is further configured to determine the operating resource based on the computing power demand.

In some embodiments, the communication unit 601 is further configured to acquire training samples; where the training samples include multiple samples with labels. The sample includes service data of the network device within a second historical time period. Labels of the samples includes computing power demand of the network device within a third historical time period after the second historical time period; the processing unit 602 is further configured to input the training samples into the initial artificial intelligence algorithm model for iterative training, to obtain the computing power demand prediction model.

In some embodiments, the processing unit 602 is further configured to operate the network device based on the operating resource within the future time period.

In some embodiments, a resource includes at least one of: a central processing unit (CPU), a graphics processing unit (GPU), a network processing unit (NPU), or a data processing unit (DPU).

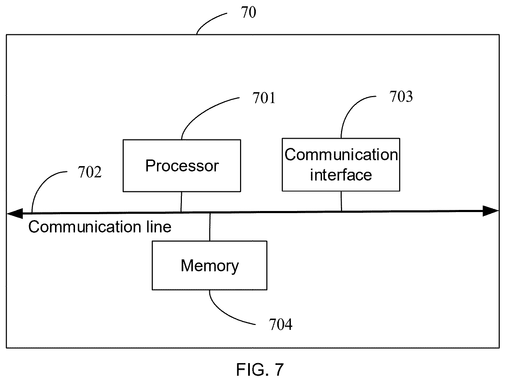

In terms of specific implementation, the devices in FIG. 1 may all adopt the composition structure shown in FIG. 7, or include the components shown in FIG. 7. FIG. 7 is a compositional schematic diagram of a communication apparatus 70 provided by the embodiments of the present disclosure. As shown in FIG. 7, the communication apparatus 70 includes a processor 701, a communication line 702, a communication interface 703, and a memory 704. The processor 701, the memory 704 and the communication interface 703 may be connected through the communication line 702.

The processor 701 may be a CPU, a general processor, a network processor (NP), a digital signal processor (DSP), a microprocessor, a microcontroller, a programmable logic device (PLD), or any combination thereof. The processor 701 may further be other apparatuses with processing functions, such as a circuit, a device or a software module, which is not limited.

The communication line 702 is configured to transmit information between components included in the communication apparatus 70.

The communication interface 703 is configured to communicate with other devices or other communication networks. The communication networks may be an Ethernet, a radio access network (RAN), wireless local area networks (WLAN), etc. The communication interface 703 may be a module, a circuit, a communication interface, or any apparatus capable of achieving communication.

The memory 704 is configured to store instructions. The instructions may be a computer program.

The memory 704 may be a read-only memory (ROM) or other types of static storage device that may store static information and/or instructions; or may also be a random access memory (RAM) and/or other types of dynamic storage devices that may store information and instructions; or may further be an electrically erasable programmable read-only memory (EEPROM), a compact disc read-only memory (CD-ROM) or other optical disc storage, optical disc storage (including compact discs, laser discs, optical discs, digital versatile discs, Blu-ray discs, etc.), a magnetic disk storage medium or other magnetic storage devices, which is not limited herein.

It should be noted that the memory 704 may exist independently of the processor 701 or may be integrated with the processor 701. The memory 704 may be used to store instructions, program codes, or some data, etc. The memory 704 may be located inside the communication apparatus 70 or outside the communication apparatus 70, which is not limited herein. The processor 701 is configured to execute the instructions stored in the memory 704, so as to achieve the energy-saving method provided by the following embodiments of this disclosure.

As an example, the processor 701 may include one or more CPUs, such as CPU0 and CPU1.

As an implementation, the communication apparatus 70 includes multiple processors.

As an implementation, the communication apparatus 70 may further include an output device and an input device. Illustratively, the input device is a keyboard, a mouse, a microphone, a joystick, or the like, and the output device is a display screen, a speaker, or the like.

It should be noted that the communication apparatus 70 may be a desktop computer, a portable computer, a network server, a mobile phone, a tablet computer, a wireless terminal, an embedded device, a chip system or a device with a structure similar to that in FIG. 7. In addition, the composition structure shown in FIG. 7 does not constitute a limitation on the various devices in FIG. 1 and FIG. 7. In addition to the components shown in FIG. 7, the various devices in FIG. 1 and FIG. 7 may include more or fewer components than those shown in FIG. 1 and FIG. 7, or combine certain components, or have a different arrangement of components.

In the embodiment of the present disclosure, the chip system may be composed of chips, or may include chips and other discrete devices. Some embodiments of the present disclosure provide a computer-readable storage medium (e.g., a non-transitory computer-readable storage medium) having stored computer program instructions that, upon being executed by a computer, cause the computer to execute the energy-saving method as described in any of the above embodiments.

For example, the computer-readable storage medium includes, but is not limited to, a magnetic storage device (e.g., a hard disk, a floppy disk or a magnetic tape), an optical disk ((e.g., a compact disk (CD), or a digital versatile disk (DVD)), a smart card and a flash memory device (e.g., an erasable programmable read-only memory (EPROM), a card, a stick or a key driver). The various computer-readable storage media described in the present disclosure may represent one or more devices for storing information and/or other machine-readable storage media for storing information. The term "machine-readable storage media" may include, but are not limited to, wireless channels and various other media capable of storing, containing, and/or carrying instructions and/or data.

The embodiments of the present disclosure provide a computer program product including instructions, where the computer program product, upon being run on a computer, enables the computer to execute the energy-saving method described in any of the above embodiments.

The above descriptions are only specific implementations of the present disclosure, but the protection scope of the present disclosure is not limited thereto. Any variations or replacements within the technical scope disclosed in the present disclosure shall fall within the protection scope of the present disclosure. Therefore, the protection scope of the present disclosure shall be subject to the protection scope of the claims.

## Claims

1. An energy-saving method, applied to a network device, wherein the method comprises:
acquiring service data of the network device within a first historical time period;
predicting, according to the service data, an operating resource of the network device within a future time period;
performing an energy-saving operation on a remaining resource in the network device within the future time period; the remaining resource is a resource in the resources of the network device other than the operating resource.

2. The method according to claim 1, wherein the service data comprises at least one of: throughput, network device load, a number of service requests, or service duration.

3. The method according to claim 2, wherein the performing the energy-saving operation on the remaining resource in the network device within the future time period comprises:
performing hibernation processing on the remaining resource within the future time period.

4. The method according to claim 2, wherein the performing the energy-saving operation on the remaining resource in the network device within the future time period comprises:
adjusting a current operating frequency of the remaining resource to a preset operating frequency within the future time period, wherein the preset operating frequency is lower than the current operating frequency.

5. The method according to any one of claims 1 to 4, wherein the predicting, according to the service data, the operating resource of the network device within the future time period comprises:
inputting the service data into a computing power demand prediction model to obtain a computing power demand of the network device within the future time period;
determining the operating resource according to the computing power demand.

6. The method according to claim 5, further comprising,
acquiring a training sample; the training sample comprises multiple samples with labels, the sample comprises service data of the network device within a second historical time period, labels of the samples comprise a computing power demand of the network device within a third historical time period after the second historical time period;
inputting the training sample into an initial artificial intelligence algorithm model for iterative training to obtain the computing power demand prediction model.

7. The method according to any one of claims 1 to 4, further comprising:
operating the network device based on the operating resource within the future time period.

8. The method according to any one of claims 1 to 4, wherein the resource comprises at least one of: a central processing unit (CPU), a graphics processing unit (GPU), a network processing unit (NPU), or a data processing unit (DPU).

9. A communication apparatus, comprising: a processor and a memory for storing instructions executable by the processor;
wherein the processor is configured to execute the instructions to enable the communication apparatus to perform the method according to any one of claims 1 to 8.

10. A computer readable storage medium, wherein the computer readable storage medium stores computer instructions that, upon being run on a computer, enable the computer to execute the method according to any one of claims 1 to 8.
